# EUROPEAN PATENT APPLICATION

(11) **EP 1 752 201 A1**
(43) Date of publication of application: **14.02.2007**
(21) Application number: 05743601.6
(22) Date of filing: 24.05.2005
(51) Int. Cl.: A63F 13/00, A63F 1/02, G06K 7/12, G06K 17/00, G06K 19/00, G06K 19/06, B42D 15/10

(54) **DATA RECORDING MEDIUM AND GAME APPARATUS**

(30) Priority: 31.05.2004 JP 2004161751; 13.10.2004 JP 2004299256
(71) Applicant: SEGA CORPORATION, Tokyo 144-8531 (JP)
(72) Inventor: KASAI, Kazuyoshi, Tokyo 1448531 (JP); TSUKAMOTO, Yousuke, Tokyo 1448531 (JP); KAJI, Toshiyuki, Tokyo 1448531 (JP); YAMAUCHI, Takao, Tokyo 1448531 (JP)
(74) Representative: Rees, Alexander Ellison
(86) International application number: PCT/JP2005/009434
(87) International publication number: WO 2005/115575

(57) **Abstract**

A data recording medium for use in a game device comprises a first printed layer in which a first code pattern, which is detected by a first code pattern detecting unit of the game device, is printed and a second printed layer in which a second code pattern, which is detected by a second code pattern detecting unit of the game device, is printed. The second printed layer is overlaid on the first printed layer. Data based on a combination of the first and second code patterns is recorded in the first and second printed layers so that the data is recognizable to the game device as data intrinsic to the data recording medium. The game device detects the first and second code patterns by the first and second code pattern detecting units to make progress of a game according to the data.

## Description

### TECHNICAL FIELD

The present invention relates to data recording media and game devices for performing a card game or the like.

### BACKGROUND ART

In a card game, a card with a figure, such as a game character, printed thereon is used, and card information indicating the kind or strength of the card concerned is printed as a code pattern to a part of the card. The card is inserted in a card slot of a card game device, or the card is placed on a play field wherein a card pattern detecting unit for reading the card pattern is provided. The code pattern is read from the card, and the card game is performed according to the card information read from the card. For example, see Japanese Laid-Open Patent Application No. 2002-301264.

In another card game device, a plurality of cards are inserted in the card game device in a state where they are made into a card bundle. In this card game device, reading of a code pattern from the card bundle is permitted without separating the plurality of cards. It is possible to prevent the cards from suffering from damages or dirt due to the conveyance of the cards, and it is possible to shorten the time for reading of the code pattern. For example, see Japanese Laid-Open Patent Application No. 2002-143367.

In a board game, a game piece in which information indicating the kind, strength, etc. of the game piece is recorded is placed on the game board which is used as the play field, and the board game is performed according to the information recorded on the game piece. For example, see Japanese Published Utility Model Application No. 63-024941.

In the card of the card game or the game piece of the board game mentioned above, a large number of cards or game pieces are used in playing the game, in view of the user-friendliness at the time of game playing and the ease of collection, conveyance, etc., it is desirable that the size of the cards or game pieces be made into an appropriate size which is not so large. Especially when a code pattern is printed in a narrow area, such as a card side face or a game piece surface, the amount of data that can be recorded therein is limited. It is desirable that the amount of recordable data be increased.

Some of the cards used in card game devices are purchased on the basis of a package, and other cards are paid out by coin insertion at the time of start of playing the game. There are also rare cards whose amount of purchase is very small. Such rare cards serve as a special role different from that of the usual cards, and players have the greatest concern in acquiring the rare cards. And forgery of the rare cards is often conducted.

One of the methods for preventing forgery of such cards is to use an electronic device, such as an IC tag, provided in each of such cards and acquire the card information from the IC tag. However, the cost of the cards with the IC tags becomes too high, and it is much higher than the cost of the normal paper-based cards. Thus, such method is not realistic.

The above-mentioned problems are not restricted to the cards for card game devices. The problems also arise in the items (for example, game pieces) accompanied by other printed matter and such printed matter on which the game data is printed can be the counterfeit target.

### DISCLOSURE OF THE INVENTION

According to one aspect of the invention, there is provided an improved game device in which the above-mentioned problems are eliminated.

According to one aspect of the invention, there is provided any of a data recording medium and a game device which are adapted to increase the amount of recordable data, without increasing the cost steeply, and prevent forgery of the data recording medium effectively.

In an embodiment of the invention which solves or reduces one or more of the above-mentioned problems, there is provided a data recording medium for use in a game device, the data recording medium comprising: a first printed layer in which a first code pattern, which is detected by a first code pattern detecting unit of the game device, is printed; and a second printed layer in which a second code pattern, which is detected by a second code pattern detecting unit of the game device, is printed; wherein the first and second printed layers are formed so that the second printed layer is overlaid on the first printed layer, wherein data based on a combination of the first and second code patterns is recorded in the first and second printed layers so that the data is recognizable to the game device as data intrinsic to the data recording medium, and the game device detects the first and second code patterns by the first and second code pattern detecting units to make progress of a game according to the data.

The above-mentioned data recording medium may be configured so that the first code pattern and the second code pattern are printed so that each content of the first code pattern and the second code pattern is respectively detectable to a code pattern reading unit using a corresponding one of light beams having different wavelengths.

The above-mentioned data recording medium may be configured so that the data intrinsic to the data recording medium is an ID information identifying the data recording medium which is used for the game device to make progress of the game.

The above-mentioned data recording medium may be configured so that the data recording medium is a card, and the first and second code patterns are printed on a side face part of the card so that the second code pattern is overlaid on the first code pattern.

The above-mentioned data recording medium may be configured so that the data recording medium is a card, and the first and second code patterns are printed on a side face part of the card so that the second code pattern is overlaid on the first code pattern, wherein the data recording medium further comprises a third printed layer which is printed with an visible ink and overlaid on the first and second code patterns.

The above-mentioned data recording medium may be configured so that the data recording medium is a game piece which is used for performing the game, and the game device is provided with a play field in which the game piece is placed, wherein the first and second code patterns are printed and overlaid on a surface of the game piece which faces the play field.

The above-mentioned data recording medium may be configured so that the first printed layer and the second printed layer which are printed and overlaid are made into a group of printed layers, and a plurality of said groups of printed layers are provided at a plurality of locations of the data recording medium.

The above-mentioned data recording medium may be configured so that the data recording medium further comprises one or more third printed layers in which a code pattern is printed so that the one or more third printed layers are overlaid on the first printed layer and the second printed layer, and code pattern detecting methods for the one or more third printed layers are different from each other.

The above-mentioned data recording medium may be configured so that one of the first and second code patterns is generated based on conversion processing of the other code pattern.

In an embodiment of the invention which solves or reduces one or more of the above-mentioned problems, there is provided a game device comprising: a first code pattern detecting unit detecting a first code pattern from among a plurality of code patterns recorded in a detection area of a data recording medium; a second code pattern detecting unit detecting a second code pattern containing information different from information contained in the first code pattern among the plurality of code patterns recorded in the data recording medium, a printed layer in which the second code pattern is printed being overlaid on a printed layer in which the first code pattern is printed in the detection area of the data recording medium; a memory unit in which a combination of the first and second code patterns is stored as being data intrinsic to the data recording medium, and game data corresponding to the combination of the first and second code patterns is stored; and a control unit adapted to detect a combination of the first and second code patterns based on detection signals from the first and second code pattern detecting units, adapted to compare the detected combination of the first and second code patterns with the code pattern combination stored in the memory unit, adapted to read, when a match occurs, game data corresponding to the detected combination from the memory unit, and adapted to execute a game program based on the read game data to makes progress of the game.

The above-mentioned game device may be configured so that the first code pattern is printed with an ultraviolet-light emission ink on a detection surface of the data recording medium and the second code pattern is printed with an infrared-light absorption ink by overlaying the second code pattern on the first code pattern, wherein the first code pattern detecting unit is provided to emit ultraviolet light to the detection surface of the data recording medium, and the second code pattern detecting unit is provided to emit infrared light to the detection surface, so that an image of the detection surface of the data recording medium is captured to detect a corresponding one of the first and second code patterns respectively.

According to the data recording medium and game device in the embodiment of the invention, it is possible to increase the amount of recordable data, without increasing the cost steeply, and it is possible to prevent forgery of the data recording medium effectively.

### BRIEF DESCRIPTION OF THE DRAWINGS

FIG. 1 is a diagram showing the composition of a card to which an embodiment of the invention is applied.
FIG. 2A, FIG. 2B and FIG. 2C are diagrams for explaining the way an ultraviolet-light emission ink appears.
FIG. 3A, FIG. 3B and FIG. 3C are diagram for explaining the way an infrared-light absorption ink appears.
FIG. 4 is a diagram for explaining the way a code pattern printed on a side face part of a card appears when it is irradiated with ultraviolet light, infrared light, and visible light, respectively.
FIG. 5 is a diagram for explaining the way a code pattern printed in an infrared-light absorption ink or an ultraviolet-light emission ink on a genuine card appears.
FIG. 6 is a diagram showing an example of an infrared light absorption spectrum of an infrared-light absorption ink.
FIG. 7 is a diagram for explaining the way a code pattern, which is printed on the card using the infrared-light absorption ink shown in FIG. 6, appears.
FIG. 8 is a diagram for explaining the way a code pattern appears.
FIG. 9A and FIG. 9B are diagrams showing the composition of a card to which an embodiment of the invention is applied.
FIG. 10 is a diagram showing the composition of a card to which an embodiment of the invention is applied.
FIG. 11 is a diagram showing an example of a third printed layer formed on a card surface in a visible ink.
FIG. 12A, FIG. 12B and FIG. 12C are diagrams showing the composition of a game piece to which an embodiment of the invention is applied.
FIG. 13 is a block diagram showing the composition of a game device in an embodiment of the invention.
FIG. 14 is a block diagram showing the composition of a code pattern reading unit which reads a code pattern on a side face part of a card.
FIG. 15 is a diagram showing an example of a card bundle.
FIG. 16A, FIG. 16B and FIG. 16C are diagrams showing the composition of a code pattern reading unit which reads a code pattern on a surface of a card or a bottom of a game piece.
FIG. 17 is a block diagram showing the composition of a code pattern reading unit.
FIG. 18 is a flowchart for explaining processing of forgery detection.
FIG. 19 is a diagram for explaining how a code pattern data is generated.
FIG. 20 is a diagram for explaining how a code pattern data is generated.
FIG. 21A and FIG. 21B are diagrams showing examples of a code pattern given to the surface of a card.
FIG. 22 is a diagram for explaining how a code pattern is detected at the time of card reading.
FIG. 23 is a diagram for explaining how a code pattern is detected at the time of card reading.

### DESCRIPTION OF REFERENCE NUMERALS

- 10: card
- 10P: card bundle
- 10a: side face part
- 11: first layer
- 12: second layer
- 15: third layer
- 20: game piece
- 21: mounting
- 22: figure
- 23: code pattern
- 24: first layer
- 25: second layer
- 100: game device
- 101: CPU
- 102: program memory
- 103: data memory
- 104: interface
- 105: code-pattern reading unit
- 106: ultraviolet-light detecting unit
- 107: infrared-light detecting unit
- 108: visible-light detecting unit
- 109: input device
- 110: display circuit part
- 111: monitor
- 112: sound circuit part
- 113: speaker
- 114: communication interface
- 121: reading light irradiating unit
- 122: camera
- 131: play field
- 132: glass plate
- 133: reading light irradiating unit
- 134: reflection plate
- 135: reflection plate
- 136: camera
- 141: reading light irradiating unit
- 142: visible light LED
- 143: ultraviolet light LED
- 144: infrared light LED
- 145: camera
- 146: image processing device
- 147: memory
- 148: output device
- 200: game device
- 300: network
- 400: server

### BEST MODE FOR CARRYING OUT THE INVENTION

A description will now be given of an embodiment of the invention with reference to the accompanying drawings.

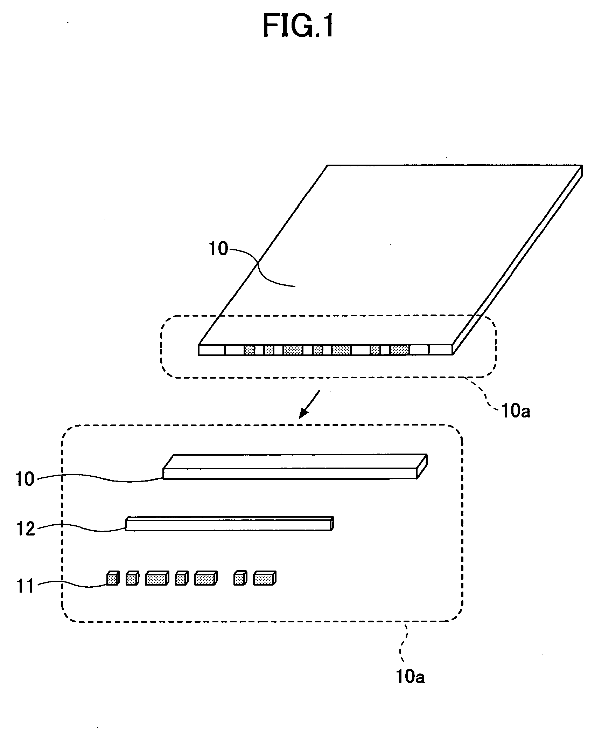

FIG. 1 shows the composition of a card to which an embodiment of the invention is applied. As shown in FIG. 1, the card 10 in this embodiment is a data recording medium which is formed in the rectangle of paper, a plastic, etc., and this card 10 includes a side face part (card edge) 10a. As indicated by the dotted line in the lower part of FIG. 1, the side face part 10A comprises a first layer 11 in which a first code pattern is printed in a colorless ultraviolet-light emission ink (UV ink), and a second layer 12 in which a second code pattern is printed in a colorless infrared-light absorption ink (IR ink).

The first and second code patterns may be formed so that they are printed and overlaid fully throughout the length of the side face part. Alternatively, the first and second code patterns may be formed so that they are partially printed and overlaid, if needed in consideration of the length of the code pattern and the size and area of the recording part.

The sequence of the first layer 11 and the second layer 12 may be reversed, and the number of layers in the side face part may be increased further. Even in such cases, it is necessary that the printing be performed using the inks having different characteristics, in order to make the detecting methods for the respective layers different from each other. The amount of recordable data and the number of the kinds of data usable for an ID or the like can be increased by increasing the number of layers, and it is possible to prevent forgery of the data recording medium more effectively.

Alternatively, the card may be formed such that the first layer 11 and the second layer 12 with the code patterns formed therein which are overlaid in the same position are made into a group of printed layers, and a plurality of groups of such printed layers may be formed at various locations of the card 10 (the long side or the short side of the side face part, the card surface, etc.). By such alternative embodiment, it is possible to further increase the amount of recordable data, and the kind of data which can be used for an ID etc.

In the above embodiment, a combination of the ultraviolet-light emission ink and the infrared-light absorption ink are used as painting materials. Alternatively, a combination of other painting materials may also be used. The types of painting materials may be divided into infrared light type, ultraviolet light type, etc. according to the light wavelength, and the reactions of painting materials to light may be divided into absorption, reflection, and luminescence. Furthermore, among the luminescence painting materials, there are one the luminescent color of which is fixed regardless of the wavelength of emission light, and one the luminescent color of which differs according to the wavelength of emission light. The use of any combination of such painting materials is conceivable.

For example, in addition to the ultraviolet-light emission ink and the infrared-light absorption ink mentioned above, a light reflection ink which reflects in response to only the light of a specific wavelength, a luminescent ink which emits light only in response to not only ultraviolet light but also the light of a specific wavelength, a luminescent ink which emits light in a different color according to the wavelength in response to the light of a specific wavelength, a light absorption ink which absorbs not only infrared light but the light of a specific wavelength, etc. can be used.

On the other hand, there are the case in which the panting materials of different kinds as in the above embodiment are used as a combination of the painting materials printed and overlaid to the respective layers, and the case in which the panting materials of the same kind which react in response to a different wavelength of the light are used. Among the cases of using the panting materials of the same kind, there may be the case of using infrared-light absorption inks which absorb infrared light of a different wavelength respectively, and the case of using light absorption inks which are different from infrared-light absorption inks but absorb light of a different wavelength respectively. In addition, other recording methods (by magnetism, etc.) which do not use printing of the panting materials reactive to light but use a different detecting method can also be used.

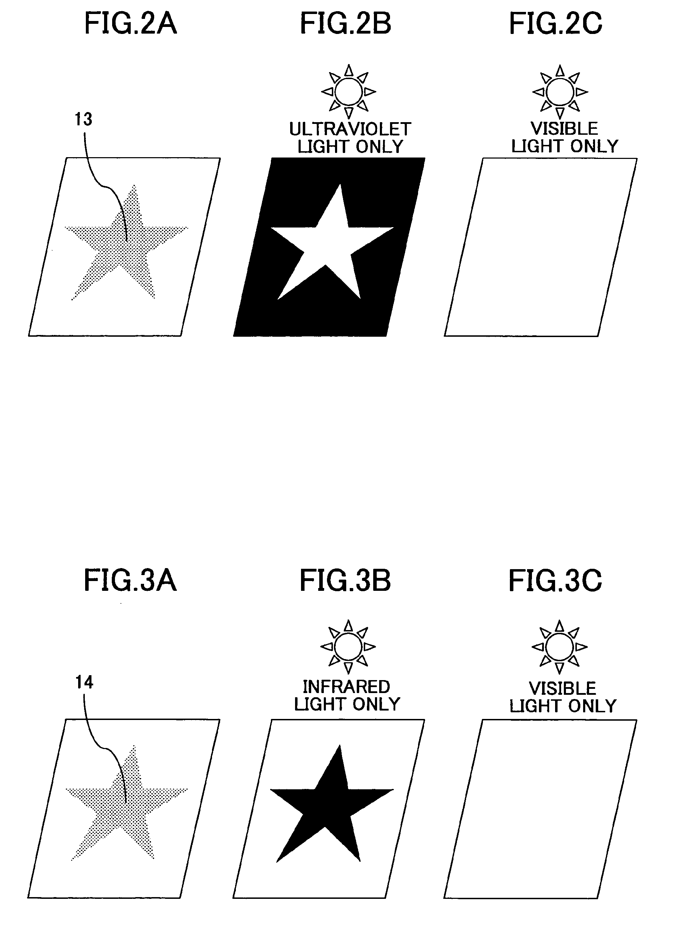

FIG. 2A, FIG. 2B and FIG. 2C are diagrams for explaining the way an ultraviolet-light emission ink in the first layer 11 appears. As shown in FIG. 2A, a pattern 13 in the shape of a star is printed in the ultraviolet-light emission ink on the card surface, not on the side face part of the card. In this case, when only ultraviolet light is applied, only the portion of pattern 13 emits light and other portions of the card surface remain dark as shown in FIG. 2B. When only the ordinary visible light is applied, nothing appears on the card surface as shown in FIG. 2C.

FIG. 3A, FIG. 3B and FIG. 3C are diagrams for explaining the way an infrared-light absorption ink appears. As shown in FIG. 3A, a pattern 14 in the shape of a star is printed in the infrared-light absorption ink on the card surface, not on the side face part of the card. In this case, when only infrared light is applied, only the portion of pattern 14 remains dark, and other portions of the card surface look bright by reflection as shown in FIG. 3B. When only the ordinary visible light is applied, nothing appears on the card surface as shown in FIG. 3C.

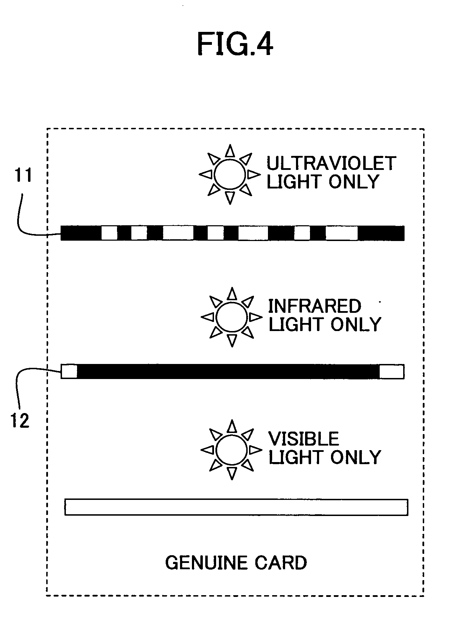

FIG. 4 is a diagram for explaining the way the code pattern of the card 10 shown in FIG. 1 appears. In the case of a genuine card, when only ultraviolet light is applied only the code pattern of the first layer 11 appears, when only infrared light is applied only the code pattern of the second layer 12 appears, and when only the visible light is applied nothing appears.

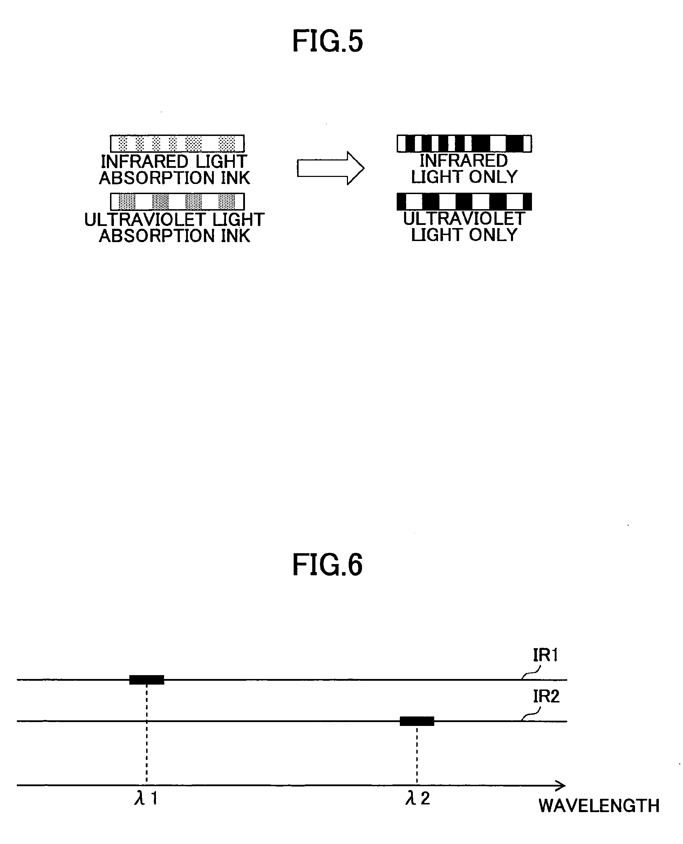

FIG. 5 is a diagram for explaining the way a code pattern printed in an infrared-light absorption ink or an ultraviolet-light emission ink on a genuine card appears when only infrared light or only ultraviolet light is applied. In this case, each of the respective code patterns appears and they do not interfere with each other.

Accordingly, printing code patterns the contents of which are different from each other on the same portion of a card without interference and applying either infrared light or ultraviolet light makes it possible to detect the content of each code pattern.

Thus, the card is provided so that the first layer 11 in which the first code pattern is printed and the second layer 12 in which the second code pattern is printed are overlaid in the same location. This makes it possible to increase the amount of recordable data even when the printing area of the card is narrow.

Since the codes the contents of which are different from each other are overlaid in a narrow area using two or more printing materials, it is difficult to acquire such printing materials and it is difficult to reproduce a card which is correctly the same as the genuine card in handwriting. It is possible to prevent forgery of the card effectively.

In the case of a card for use in a game device, the first code pattern and the second code pattern are combined together, the combination is recognized as data (for example, ID information) intrinsic to the card, and progress of the game is made in accordance with the data intrinsic to the card.

In the above embodiment of FIG. 1 - FIG. 5, the case where the ultraviolet-light emission ink and the infrared-light absorption ink (which are the painting materials of different kinds) are used in the first layer 11 and the second layer 12 of the card has been described. Alternatively, infrared-light absorption inks with different absorption wavelengths (which are the painting material of the same kind) may be used.

FIG. 6 shows an example of an infrared light absorption spectrum of an infrared-light absorption ink.

As shown, an infrared-light absorption ink IR1 which has an absorption peak at wavelength λ1, and an infrared-light absorption ink IR2 which has an absorption peak at wavelength λ2 are used. The infrared-light absorption ink IR1 can be applied to the first layer 11 of FIG. 1, and the infrared-light absorption ink IR2 can be applied to the second layer 12 of FIG. 1. It is a matter of course that the relation between the inks and the layers may be made reverse to that shown in FIG. 6.

Alternatively, instead of the infrared-light absorption inks each having one absorption peak as shown in FIG. 6, one infrared-light absorption ink having two or more absorption peaks in a range inclusive of an absorption peak of another infrared-light absorption ink may be used. For example, it is possible to use an infrared-light absorption ink IR1 having absorption peaks at wavelength λ1 and wavelength λ2, and an infrared-light absorption ink IR2 having an absorption peak at wavelength λ2. In this case, when the infrared light of wavelength λ1 is applied, only the code pattern which uses the infrared-light absorption ink IR1 appears, and when the infrared light of wavelength λ2 is applied, both the code patterns using the infrared-light absorption ink IR1 and the infrared-light absorption ink IR2 appear.

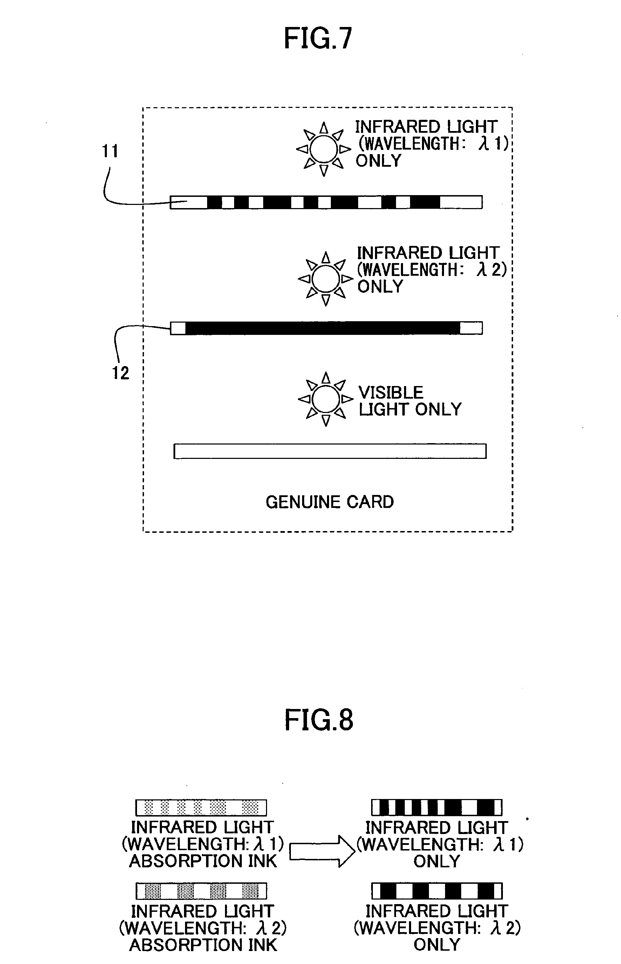

FIG. 7 is a diagram for explaining the way a code pattern, which is printed on the card 10 using the infrared-light absorption ink shown in FIG. 6, appears. In the case of a genuine card, when only the infrared light of wavelength λ1 is applied, only the code pattern of the first layer 11 appears, when only the infrared light of wavelength λ2 is applied, only the code pattern of the second layer 12 appears, and when only the visible light is applied, nothing appears on the card.

FIG. 8 is a diagram for explaining the way a code pattern appears. As shown, the code patterns are printed in infrared-light absorption inks having different absorption wavelengths on a genuine card, respectively. When one of the infrared lights of different wavelengths is applied, a corresponding one of the code patterns appears, and the code patterns do not interfere with each other. Accordingly, printing the code patterns, the contents of which are different from each other, in the same place of the card without interfering mutually, and applying either of the infrared lights of different wavelengths makes it possible to detect the content of each code pattern.

Thus, by using the infrared-light absorption inks having different absorption wavelengths which are the painting materials of the same kind, the difficulty to identify the specific absorption wavelength of the ink is further added to the difficulty in acquiring the infrared-light absorption inks. It is possible to prevent forgery of the card more effectively.

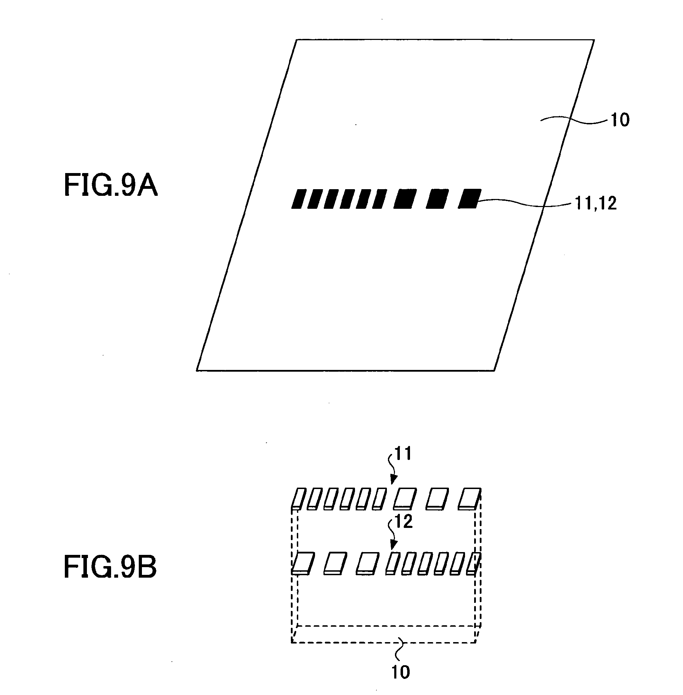

FIG. 9A and FIG. 9B are diagrams showing the composition of a card to which an embodiment of the invention is applied. FIG. 9A is a perspective view of the whole card, and FIG. 9B is an exploded view of the code pattern portion of the card.

As shown, the card 10 in this embodiment is provided so that the first layer 11 in which the first code pattern is printed and the second layer 12 in which the second code pattern is printed are overlaid on the surface of the card 10, not on the side face part of the card 10. In this case, the first and second code patterns may be formed so that they are printed and overlaid fully throughout the length of the card. Alternatively, the first and second code patterns may be formed so that they are partially printed and overlaid, if needed in consideration of the length of the code pattern and the size and area of the recording part. The code pattern is not limited to the illustrated one and two-dimensional code patterns and other code patterns may be also usable. The number of layers in which code patterns are printed may be increased, and printing may be performed using the inks having different characteristics in order to make the detecting methods for the respective layers different from each other.

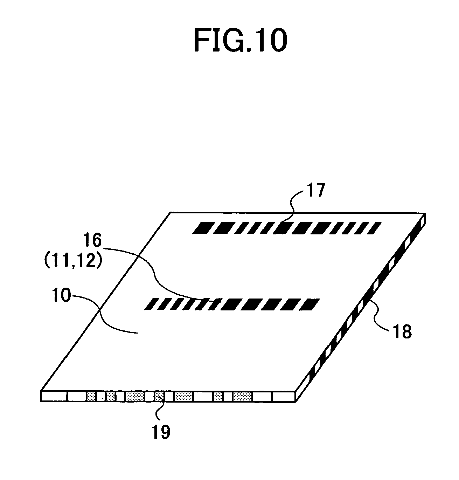

Moreover, it is possible that the first and second layers which are printed and overlaid in the same position be made into a group of printed layers, and a plurality of groups 16-19 of printed layers be formed at respective locations of the card 10 (e.g., the respective locations of the card surface, the long side or the short side of the side face part, etc.), as shown in FIG. 10. This makes it possible to increase the amount of recordable data further, and makes it possible to increase the kinds of data which can be used for an ID, etc.

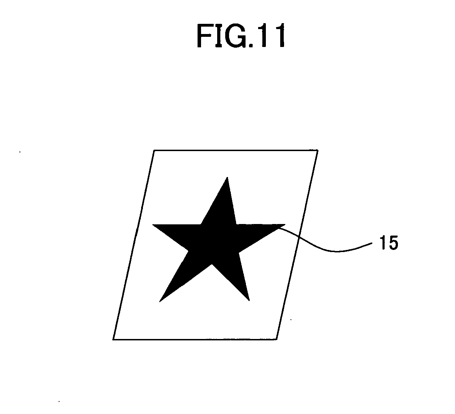

Moreover, a third layer 15 may be printed in the visible ink on the first layer 11 and the second layer 12 of the card 10 of FIG. 9 or FIG. 10 as shown in FIG. 11. In this case, a graphic pattern as shown in FIG. 11 may be formed in the third layer 15, in order to make the code patterns of the first layer 11 and second layer 12 formed under the third layer 15 difficult to be noticeable to the naked human eyes. Thus, it is possible to prevent forgery of the card more effectively.

Moreover, it is possible to have a significant code pattern included in the third layer 15 and to perform recognition of a combination of the first through third code patterns by the card game device. This makes it possible to increase the amount of recordable data per unit area further, and it is possible to prevent forgery of the card still more effectively.

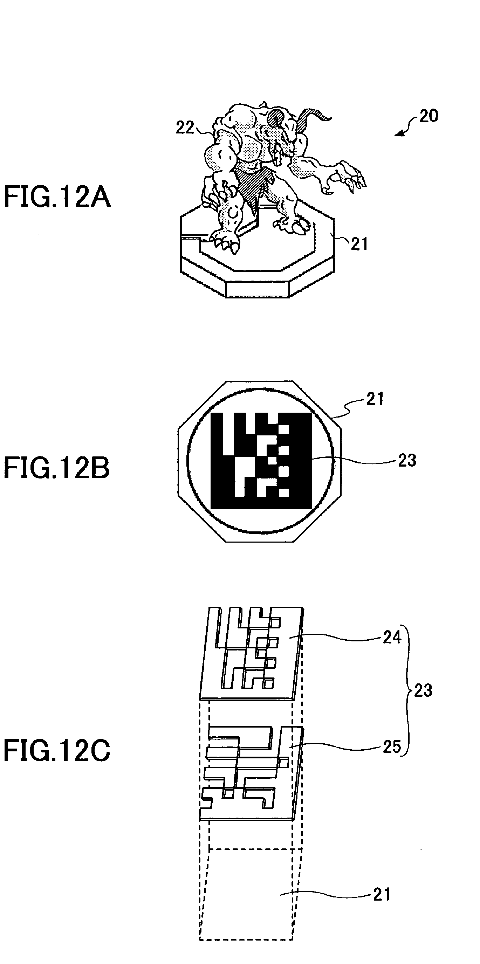

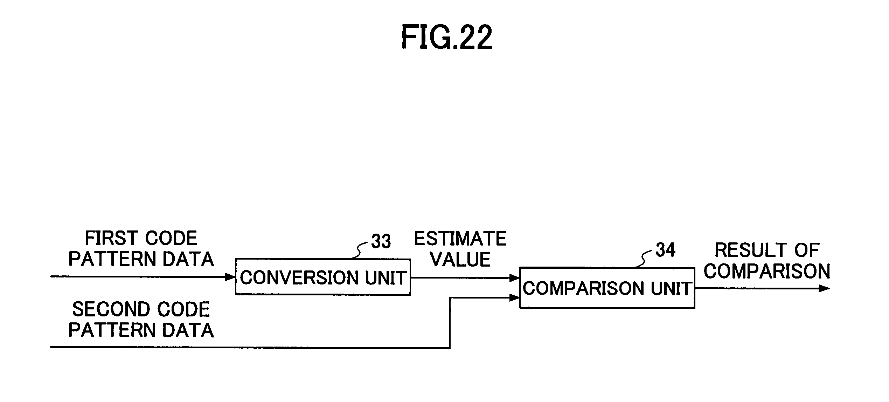

FIG. 12A, FIG. 12B and FIG. 12C are diagrams showing the composition of a game piece to which an embodiment of the invention is applied. FIG. 12A shows the appearance of a game piece 20. As shown, a figure 22, such as a game character, is fixed onto a mounting 21.

FIG. 12B shows the back surface of the mounting 21. As shown, a code pattern 23 is formed on the back surface of the mounting 21 such that a plurality of code patterns are printed in the multiple layers to form the code pattern 23.

FIG. 12C is an exploded view of the portion of the code pattern 23 in the game piece. As shown, the first layer 24 in which the first code pattern is formed and the second layer 25 in which the second code pattern is formed are overlaid to form the code pattern 23 on the back surface of the mounting 21. In this case, the first and second code patterns may be formed so that they are printed and overlaid fully throughout the length of the mounting. Alternatively, the first and second code patterns may be formed so that they are partially printed and overlaid, if needed in consideration of the length of the code pattern and the size and area of the recording part. The code pattern 23 is not limited to the illustrated one. The code pattern 23 may be formed in the shape of a seal so that it is attached to the back surface of the mounting 21, in order to make the manufacture easy.

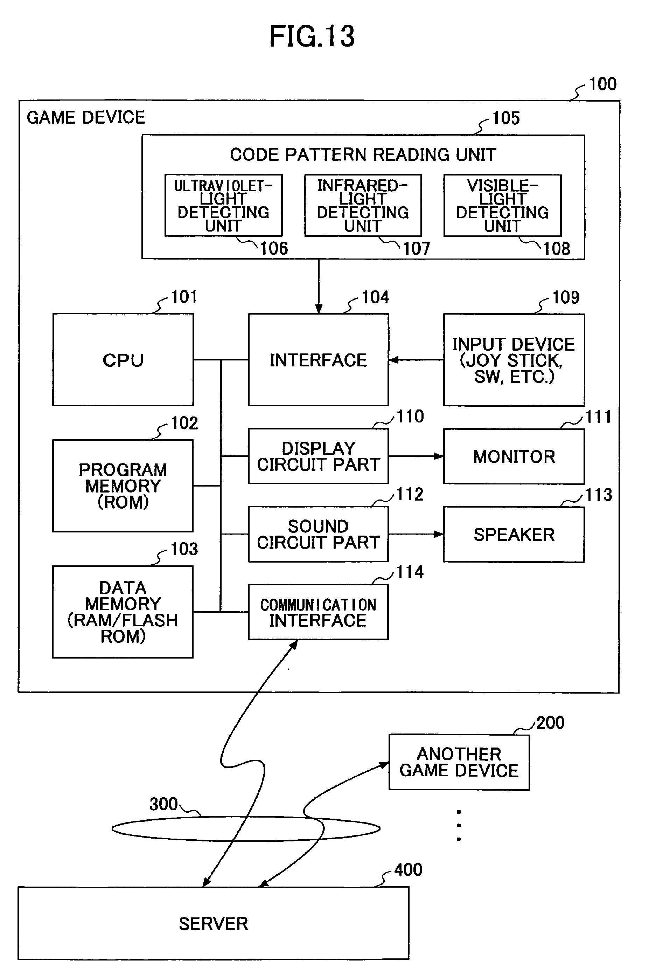

FIG. 13 is a block diagram showing the composition of a game device in an embodiment of the invention.

As shown in FIG. 13, the game device 100 in this embodiment is connected to a server 400 via a network 300 and at the same time it is connected to another game device 200. Alternatively, the game device 100 may be configured as being a stand-alone device.

The game apparatus 100 is provided with the following: a CPU 101 which controls the whole device; a program memory 102 in which a program is stored; a data memory 103 in which data is stored; an interface 104 which connects the game device 100 with the peripheral device; a code pattern reading unit 105 and an input device 109 which are connected by the interface 104; a display circuit part 110 which displays an image on a monitor 111; a sound circuit part 112 which outputs a voice to a speaker 113, and a communication interface 114 which enables the game device 100 to communicate with the server 400 via the network 300.

In order to read a plurality of code patterns from the card 10 (FIG. 1, FIG. 9A or FIG. 10) or the game piece 20 (FIG. 12), the code pattern reading unit 105 serves as a code pattern detecting unit. The code pattern reading unit 105 comprises an ultraviolet-light detecting unit 106 which reads a code pattern by emission of ultraviolet light, an infrared-light detecting unit 107 which reads a code pattern by emission of infrared light, and a visible-light detecting unit 108 which reads a code pattern by emission of the visible light.

When the infrared-light absorption inks having different absorption wavelengths and using the painting materials of the same kind shown in FIG. 6 - FIG. 8 are printed on the card 10 or the game piece 20, both the detecting units 106 and 107 are provided as being infrared-light detecting units. Each of such infrared-light detecting units is provided to emit the infrared light of a corresponding wavelength respectively, so that the code pattern is read.

During operation, the game device 100 reads a plurality of code patterns from the card 10 or the game piece 20 using the code pattern reading unit 105 under the control of the CPU 101. The game device 100 acquires the intrinsic data from the card 10 or the game piece 20 based on the combination of the plurality of code patterns read.

On the other hand, the game data intrinsic to all the cards 10 or the game pieces 20 used in performing the game are stored beforehand in the data memory 103. The stored game data corresponding to the read intrinsic data is read from the data memory 103 by retrieving the data memory 103 with the read intrinsic data. The game program is executed based on the read game data so that progress of the game is gone on.

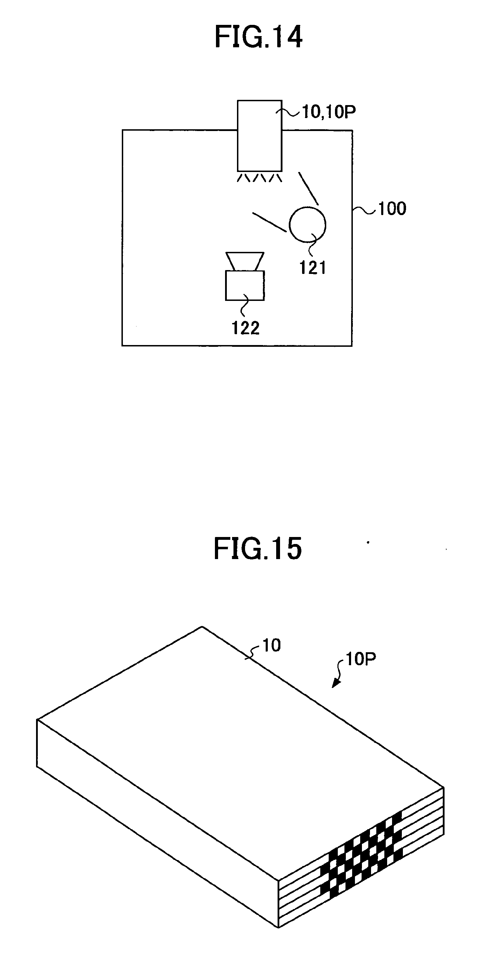

FIG. 14 is a diagram showing the composition of a code pattern reading unit which reads a code pattern on a side face part of a card. As shown in FIG. 14, the game device 100 is provided so that a card 10 or a card bundle 10P shown in FIG. 15 may be inserted into a card slot which is provided in a portion of the game device 100. A reading light irradiating unit 121 emits reading light (any of ultraviolet light, infrared light, and visible light) to the side face part of the card 10 or the card bundle 10P. A camera 122 captures an image of the side face part of the card 10 or the card bundle 10P, which is irradiated with the reading light from the reading light irradiating unit 121.

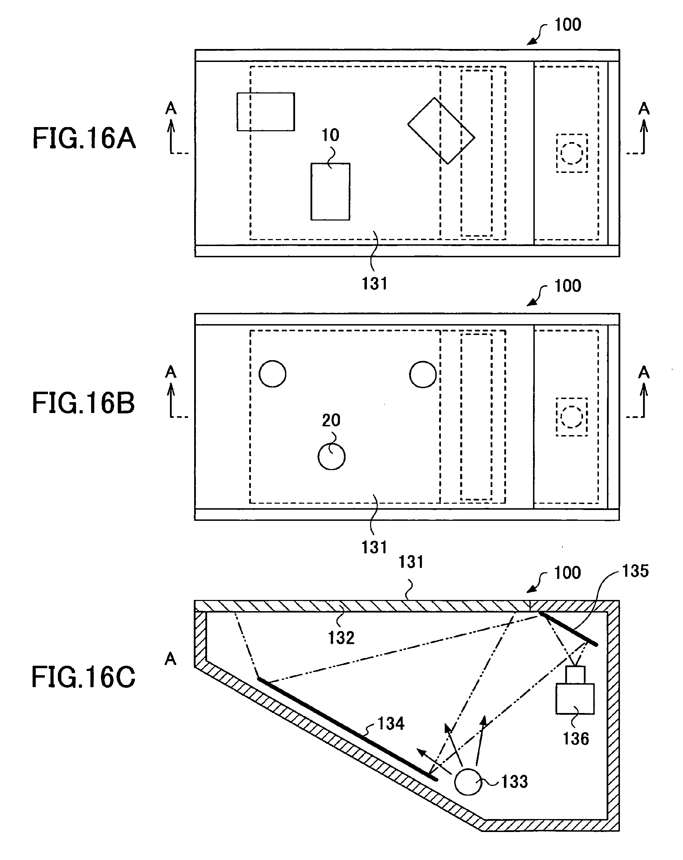

FIG. 16A, FIG. 16B and FIG. 16C are diagrams showing the composition of a code pattern reading unit which reads a code pattern on a surface of a card or a bottom of a game piece. FIG. 16A and FIG. 16B show the game device 100 when viewed from the upper part thereof. As shown, the game device 100 is provided with a play field 131 in which the card 10 or the game piece 20 is placed. FIG. 16C is a cross-sectional view of the game device 100 taken along the line A-A indicated in FIG. 16A and FIG. 16B. As shown, the card 10 or the game piece 20 is placed on a glass plate 132 which constitutes the play field 131, and a reading light irradiating unit 133 emits reading light, such as infrared light, ultraviolet light, or visible light, to the card 10 or the game piece 20. The reflected light from the glass plate 132 (play field 131) is reflected to a camera 136 by reflection plates 134 and 135, and the image is captured by the camera 136.

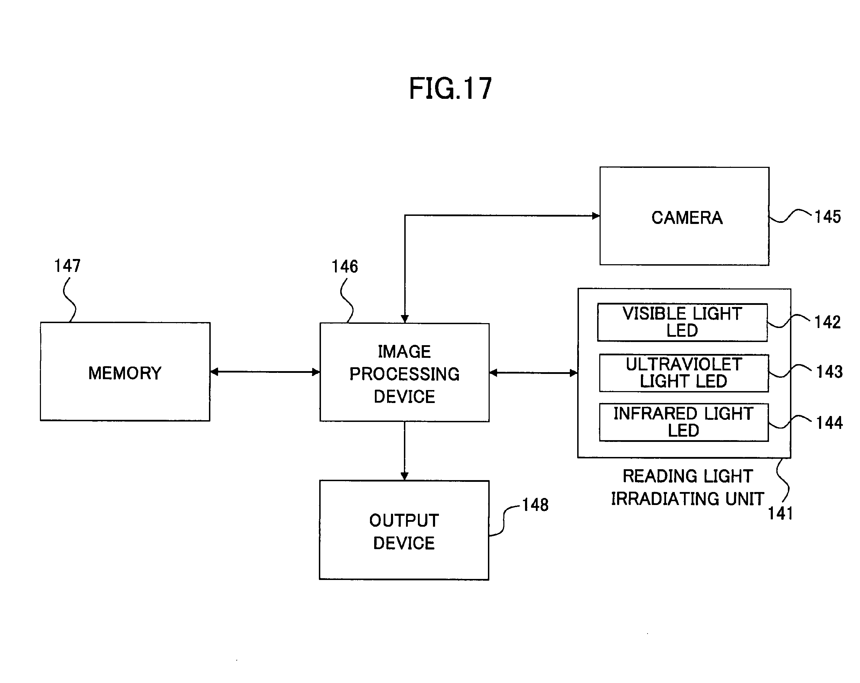

FIG. 17 is a block diagram showing the composition of a code pattern reading unit. As shown in FIG. 17, the code pattern reading unit comprises an reading light irradiating unit 141 which includes a visible light LED (light emitting diode) 142 which emits visible light, an ultraviolet light LED 143 which emits ultraviolet light, and an infrared light LED 144 which emit infrared light. The reading light irradiating unit 141 emits the reading light to the read object, such as a card. The code pattern reading unit further comprises a camera 145, an image processing device 146, a memory 147, and an output device 148. The camera 145 captures an image of the read object, such as a card. The image processing device 146 controls light emission of the reading light irradiating unit 141 and processes the image captured by the camera 145. The memory 147 is used as a work area of the program and data. The output device 148 is provided to output the reading result from the image processing device 146.

When the infrared-light absorption inks of the painting materials of the same kind but having different absorption wavelengths as shown in FIG. 6 - FIG. 8 are used in the card 10 or the game piece 20, each of the LEDs 143 and 144 is set to the infrared light LED, and each LED is provided to emit an infrared light of a corresponding different wavelength, respectively.

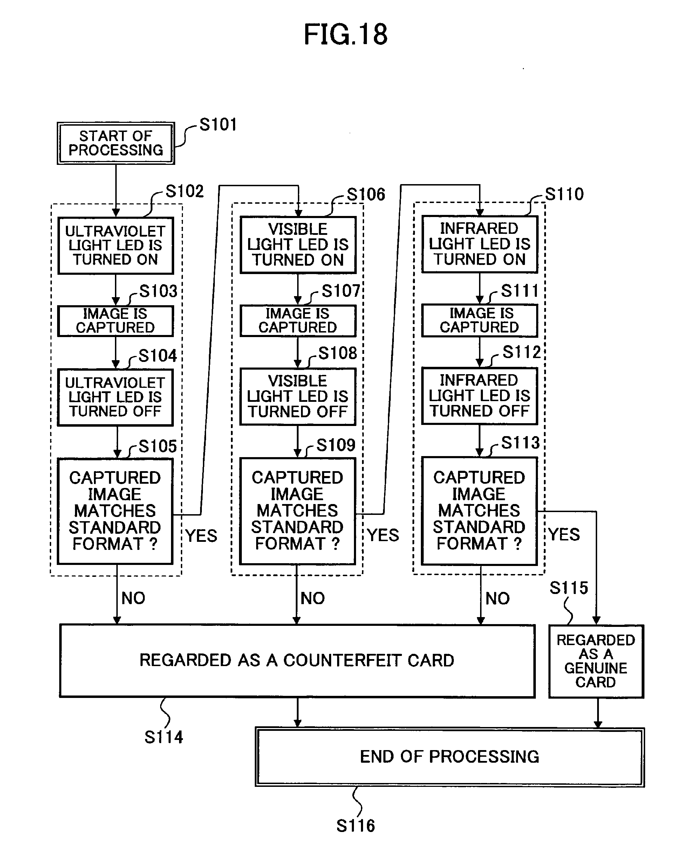

FIG. 18 is a flowchart for explaining processing of forgery detection performed by the above-mentioned code pattern reading unit. A description will be given of the processing of forgery detection with reference to FIG. 18.

After the card of the read object is inserted in the game device, the processing starts (step S101). The ultraviolet light LED 143 of the reading light irradiating unit 141 is turned on (step S102). The image is captured by the camera 145 (step S103). The ultraviolet light LED 143 is turned off (step S104). And the image processing device 146 determines whether the code pattern obtained from the captured image matches the standard format (step S105). When the code pattern (the captured image by the ultraviolet light) does not match the standard format, it is regarded as a counterfeit card (step S114). And the processing is ended (step S116).

On the other hand, when the captured image by the ultraviolet light matches the standard format, the visible light LED 142 of the reading light irradiating unit 141 is turned on (step S106). The image is captured by the camera 145 (step S107). The visible light LED 142 is turned off (step S108). And the image processing device 146 determines whether the code pattern obtained from the captured image matches the standard format (step S109). When the code pattern (the captured image by the visible light) does not match the standard format, it is regarded as a counterfeit card (step S114). And the processing is ended (step S116).

On the other hand, when the captured image by the visible light matches the standard format, the infrared light LED 144 of the reading light irradiating unit 141 is turned on (step S110). The image is captured by the camera 145 (step S111). The infrared light LED 144 is turned off (step S112). And the image processing device 146 determines whether the code pattern obtained from the captured image matches the standard format (step S113). When the code pattern (the captured image by the infrared light) does not match the standard format, it is regarded as a counterfeit card (step S114). And the processing is ended (step S116).

On the other hand, when the captured image by the infrared light matches the standard format, it is regarded as a genuine card (step S115). And the processing is ended (step S116).

According to the above processing, it is possible to distinguish between a genuine card and a counterfeit card correctly. In the processing of FIG. 18, the image capturing and judgment are performed in order of ultraviolet light, visible light, and infrared light. However, the sequence of performing the image capturing and judgment for ultraviolet light, visible light, and infrared light may be changed.

When the infrared-light absorption inks of the painting materials of the same kind but having different absorption wavelengths as shown in FIG. 6 - FIG. 8 are used in the card 10 or the game piece 20, the processing of steps S102-S105 is set to a format checking processing using the infrared light of a first absorption wavelength, and the processing of steps S110-S113 is set to a format checking processing using the infrared light of a second absorption wavelength.

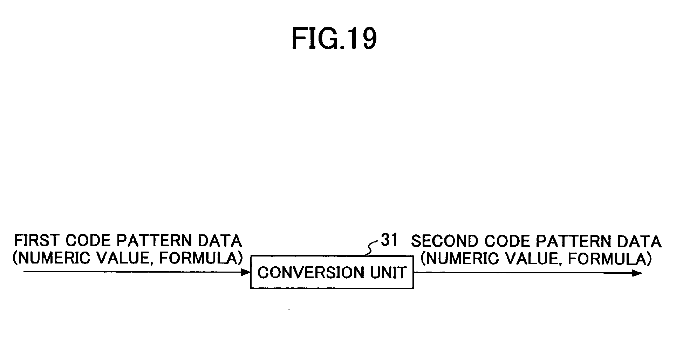

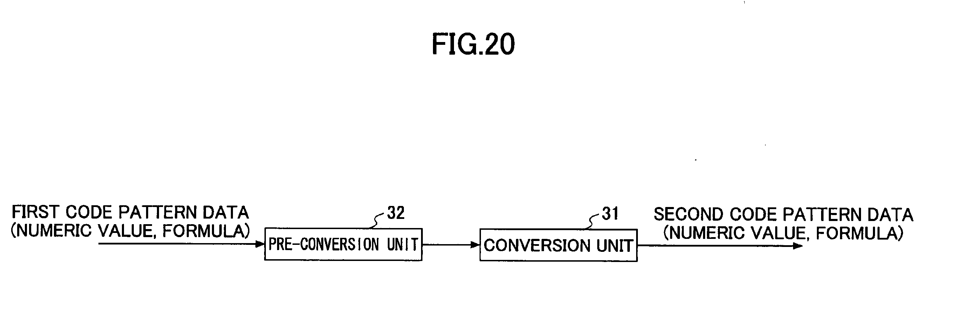

FIG. 19 and FIG. 20 are diagrams for explaining how a code pattern data corresponding to a code pattern printed or attached to a card or the like is generated.

There are two cases for first and second code patterns: a case in which each of the first code pattern data and the second code pattern data represents a numeric value equivalent to a sequence of bits corresponding to a one-dimensional code (bar code) or a two-dimensional code, and a case in which each of the first code pattern data and the second code pattern data represents a formula of a straight line or a curve corresponding to a two-dimensional graphic figure.

In the case of the code pattern given to the side face part 10a of the card 10 as shown in FIG. 1, a one-dimensional code containing a sequence of bits based on a numeric value is appropriate. In the case of the code pattern given to the surface of the card 10 as shown in FIG. 9, a two-dimensional graphic figure based on a straight line/curve formula or a two-dimensional code containing a sequence of bits based on a numeric value is appropriate. It is a matter of course that a one-dimensional code is also applicable to the surface of the card 10.

As shown in FIG. 19, a conversion unit 31 converts the numeric value or formula of the first code pattern data using a predetermined formula (function) so that the numeric value or formula of the second code pattern data is obtained.

When the second code pattern data is a numeric value, the numeric value of the second code pattern data can be acquired by applying a suitable function to the numeric value or the coefficient of the formula of the first code pattern data. When the second code pattern data is a formula, computation is performed for the numeric value or the coefficient of the formula of the first code pattern data, and the result of the computation is substituting for the coefficient of a formula which represents a straight line or a curve. And a unique straight line/curve formula of one or a plurality of lines is derived, so that the second code pattern data can be obtained.

As shown in FIG. 20, a pre-conversion unit 32 is provided in front of the conversion unit 31 mentioned above, and this pre-conversion unit 21 performs encryption or conversion using a conversion table with respect to the numeric value or the coefficient of the formula of the first code pattern data. And based on the result of encryption or conversion received from the pre-conversion unit 32, the conversion unit 31 obtains the second code pattern data. This embodiment makes it possible to make decoding of the relation between the first code pattern data and the second code pattern data by the third party much more difficult.

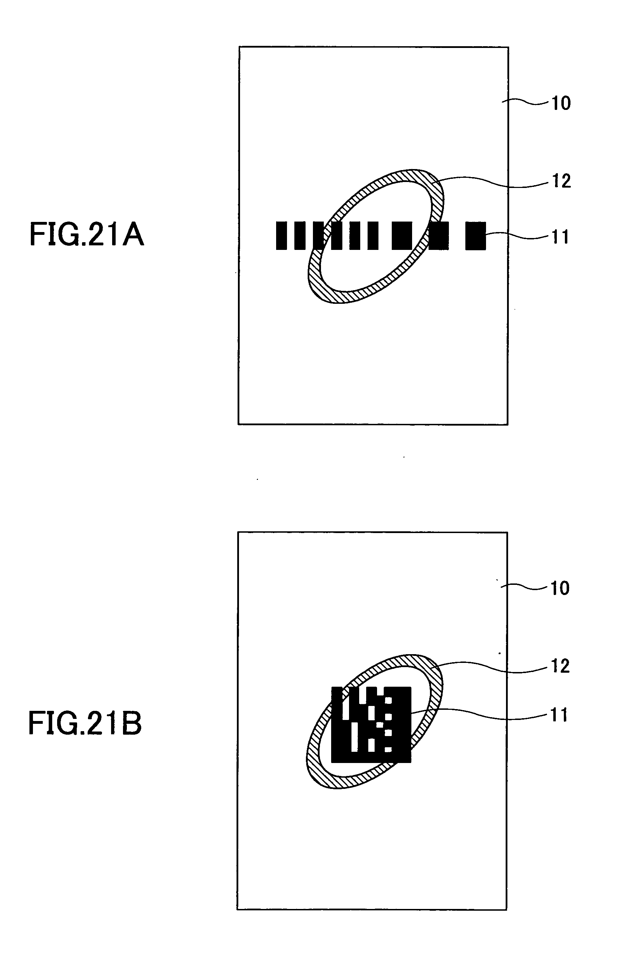

FIG. 21A shows an example of the code pattern given to the surface of the card 10. As shown, the code pattern of the first layer 11 is a one-dimensional code containing a sequence of bits based on a numeric value. The code pattern of the second layer 12, which is printed and overlaid on the first layer 11, represents a two-dimensional graphic figure which is based the formula obtained by conversion of the numeric value of the code pattern of the first layer 11. FIG. 21B shows an example of the code pattern given to the surface of the card 10. As shown, the code pattern of the first layer 11 is a two-dimensional code containing a sequence of bits based on a numeric value. The code pattern of the second layer 12, which is printed and overlaid on the first layer 11, represents a two-dimensional graphic figure which is based the formula obtained by conversion of the numeric value of the code pattern of the first layer 11. The combination of code patterns is not limited to these illustrated ones.

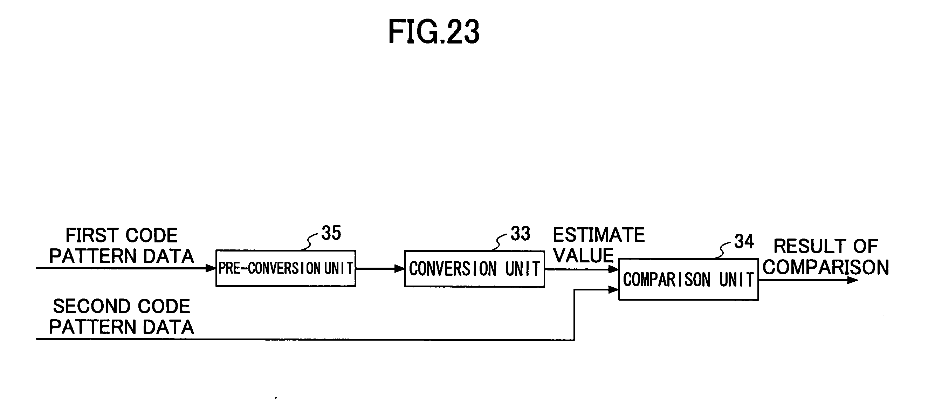

FIG. 22 and FIG. 23 are diagrams for explaining how the code patterns of FIG. 19 and FIG. 20 are detected at the time of card reading. The diagram of FIG. 22 corresponds to the code pattern generation of FIG. 19, and the diagram of FIG. 23 corresponds to the code pattern generation of FIG. 20.

In the embodiment of FIG. 22, a conversion unit 33 creates an estimate value of the second code pattern data based on the first code pattern data read from the card. The conversion processing of the conversion unit 33 is essentially the same as that of the conversion unit 31 in FIG. 19, and a description thereof will be omitted. A comparison unit 34 compares the second code pattern data read from the card with the above-mentioned estimate value from the conversion unit 33. When a match occurs, the card of the read object is recognized as a genuine card. When no match occurs, it is recognized as a counterfeit card.

The above-mentioned comparison of the comparison unit 34 is performed in the form of code pattern data. This comparison may be performed in the form of a recognition image. For example, the recognition in such a case may be performed based on whether a recognition image of the second code pattern read from the card has the features according to the estimate value obtained by the conversion unit 33.

In the embodiment of FIG. 23, a pre-conversion unit 35 is provided in front of the conversion unit 33, and this pre-conversion unit 35 is provided to perform encryption or conversion using a conversion table with respect to the numeric value or the coefficient of the formula of the first code pattern data. And other composition of this embodiment is essentially the same as that of the embodiment of FIG. 22, and a description thereof will be omitted.

The present invention is not limited to the above-described embodiments, and variations and modifications may be made without departing from the scope of the present invention.

## Claims

1. A data recording medium for use in a game device, comprising:
a first printed layer in which a first code pattern, which is detected by a first code pattern detecting unit of the game device, is printed; and
a second printed layer in which a second code pattern, which is detected by a second code pattern detecting unit of the game device, is printed;
wherein the first and second printed layers are formed so that the second printed layer is overlaid on the first printed layer,
wherein data based on a combination of the first and second code patterns is recorded in the first and second printed layers so that the data is recognizable to the game device as data intrinsic to the data recording medium, and the game device detects the first and second code patterns by the first and second code pattern detecting units to make progress of a game according to the data.

2. The data recording medium according to claim 1, wherein the first code pattern and the second code pattern are printed so that each content of the first code pattern and the second code pattern is respectively detectable to a code pattern reading unit using a corresponding one of light beams having different wavelengths.

3. The data recording medium according to claim 1, wherein the data intrinsic to the data recording medium is an ID information identifying the data recording medium which is used for the game device to make progress of the game.

4. The data recording medium according to claim 1, wherein the data recording medium is a card, and the first and second code patterns are printed on a side face part of the card so that the second code pattern is overlaid on the first code pattern.

5. The data recording medium according to claim 1, wherein the data recording medium is a card, and the first and second code patterns are printed on a side face part of the card so that the second code pattern is overlaid on the first code pattern,
wherein the data recording medium further comprises a third printed layer which is printed with an visible ink and overlaid on the first and second code patterns.

6. The data recording medium according to claim 1, wherein the data recording medium is a game piece which is used for performing the game, and the game device is provided with a play field in which the game piece is placed,
wherein the first and second code patterns are printed and overlaid on a surface of the game piece which faces the play field.

7. The data recording medium according to claim 1, wherein the first printed layer and the second printed layer which are printed and overlaid are made into a group of printed layers, and a plurality of said groups of printed layers are provided at a plurality of locations of the data recording medium.

8. The data recording medium according to claim 1, further comprising one or more third printed layers in which a code pattern is printed so that the one or more third printed layers are overlaid on the first printed layer and the second printed layer, and code pattern detecting methods for the one or more third printed layers are different from each other.

9. The data recording medium according to claim 1, wherein one of the first and second code patterns is generated based on conversion processing of the other code pattern.

10. A game device comprising:
a first code pattern detecting unit detecting a first code pattern from among a plurality of code patterns recorded in a detection area of a data recording medium;
a second code pattern detecting unit detecting a second code pattern containing information different from information contained in the first code pattern among the plurality of code patterns recorded in the data recording medium, a printed layer in which the second code pattern is printed being overlaid on a printed layer in which the first code pattern is printed in the detection area of the data recording medium;
a memory unit in which a combination of the first and second code patterns is stored as being data intrinsic to the data recording medium, and game data corresponding to the combination of the first and second code patterns is stored; and
a control unit adapted to detect a combination of the first and second code patterns based on detection signals from the first and second code pattern detecting units, adapted to compare the detected combination of the first and second code patterns with the code pattern combination stored in the memory unit, adapted to read, when a match occurs, game data corresponding to the detected combination from the memory unit, and adapted to execute a game program based on the read game data to makes progress of the game.

11. The game device according to claim 10,
wherein the first code pattern is printed with an ultraviolet-light emission ink on a detection surface of the data recording medium and the second code pattern is printed with an infrared-light absorption ink by overlaying the second code pattern on the first code pattern,
wherein the first code pattern detecting unit is provided to emit ultraviolet light to the detection surface of the data recording medium, and the second code pattern detecting unit is provided to emit infrared light to the detection surface, so that an image of the detection surface of the data recording medium is captured to detect a corresponding one of the first and second code patterns respectively.
